# EUROPÄISCHE PATENTSCHRIFT

(11) **EP 0 906 404 B1**
(45) Veröffentlichungstag und Bekanntmachung des Hinweises auf die Patenterteilung: **16.08.2001**
(21) Anmeldenummer: 97927126.9
(22) Anmeldetag: 04.06.1997
(51) Int. Cl.: C11D 3/39, C11D 1/65, C11D 17/00

(54) **VERDICKUNGSMITTEL FÜR WÄSSRIGE WASSERSTOFFPEROXIDLÖSUNGEN**
THICKENING AGENT FOR AQUEOUS HYDROGEN PEROXIDE SOLUTIONS
EPAISSISSANT POUR SOLUTIONS DE PEROXYDE D'HYDROGENE AQUEUSES

(30) Priorität: 13.06.1996 DE 19623571
(43) Veröffentlichungstag der Anmeldung: 07.04.1999
(73) Patentinhaber: Cognis Deutschland GmbH, 40589 Düsseldorf (DE)
(72) Erfinder: BONASTRE, Nuria, E-080210 Barberà del Vallès (ES); PI SUBIRANA, Rafael, E-08400 Granollers (ES)
(86) Internationale Anmeldenummer: EP9702890
(87) Internationale Veröffentlichungsnummer: WO9747718

(56) Entgegenhaltungen:
- EP-A- 0 212 407
- EP-A- 0 376 704
- EP-A- 0 667 392
- DE-A- 4 418 847
- GB-A- 855 679
- US-A- 4 992 107
- DATABASE WPI Section Ch, Week 9011 Derwent Publications Ltd., London, GB; Class A97, AN 90-080399 XP002049093 & JP 02 034 696 A (KAO CORP) , 5.Februar 1990

## Beschreibung

Gegenstand der Anmeldung sind Verdickungsmittel für wäßrige Wasserstoffperoxidlösungen, enthaltend Fettsäurealkanolamide, Alkylethersulfate sowie gegebenenfalls Alkyletherphosphate und/oder Alkylpolyglycolether und die Verwendung der Mischungen als Verdickungsmittel für wäßrige Wasserstoffperoxidlösungen.

In der Vergangenheit haben sich in den Bereichen Hygiene und Desinfektion solche Bleichmittel auf der Grundlage von Wasserstoffperoxid bewährt, die über eine bemerkenswerte Viskosität verfügen und sich daher sowohl für die Behandlung horizontaler als auch geneigter und vor allem vertikaler Oberflächen eignen. Die Viskosität dieser Mittel bewirkt, daß die Kontaktzeit zwischen diesen und den zu behandelnden Oberflächen wesentlich größer ist als bei handelsüblichen Flüssigprodukten, die rasch von der Oberfläche abfließen. Daneben besteht jedoch auch ein Bedürfnis nach niedrigviskosen, in ihrer Konsistenz wasserähnlichen Produkten, die rasch und vollständig von den behandelnden Flächen ablaufen.

Aus dem Stand der Technik sind eine Reihe von Bleich- und Reinigungsmitteln bekannt, die jedoch vornehmlich eine höhere Viskosität aufweisen. Aus der Deutschen Offenlegungsschrift **DE-OS 15 67 570** (Henkel) sind beispielsweise flüssige oder pastenförmige, Aktivsauerstoff enthaltende Konzentrate bekannt, die man durch Umsetzung von Phosporpentoxid mit niedermolekularen Alkoholen und Wasserstoffperoxid erhält. Aus der Deutschen Patentanmeldung **DE-A1 42 02 720** (Henkel) sind Formulierungen zum gleichzeitigen Entschlichten, Abkochen und Bleichen von cellulosehaltigen Textilmaterialien bekannt, die anionische Tenside, ethoxylierte Fettalkohole und Wasserstoffperoxid enthalten. Die Mittel sind jedoch für die Reinigung harter Oberflächen ungeeignet. Gemäß der Deutschen Offenlegungsschrift **DE-A1 44 18 847** (Henkel) lassen sich viskose Bleichmittel durch Zugabe von Fettalkoholpolyglycolethern und ethoxylierten Phosphorsäureestern zu Wasserstoffperoxidlösungen herstellen.

Trotz des umfangreichen Stands der Technik, der an dieser Stelle nur exemplarisch wiedergegeben werden kann, sind die Produkte des Marktes im Hinblick auf ihr Leistungsvermögen nach wie vor nicht völlig zufriedenstellend: Die Viskosität ist häufig zu hoch und verändert sich im Laufe der Lagerung, die Tensidkomponente ist gegenüber Aktivsauerstoff nicht ausreichend stabil, gelöster Schmutz wird wieder auf der Oberfläche redeponiert und läßt diese stumpf erscheinen, schließlich lassen sich Parfümstoffe nicht ohne die Gefahr von unerwünschten Austrübungen einarbeiten.

Die Aufgabe der Erfindung hat somit darin bestanden, neue Zusatzstoffe für wäßrige Bleichmittel auf Basis von Wasserstoffperoxid zur Verfügung zu stellen, mit deren Hilfe die geschilderten Nachteile zuverlässig überwunden werden können.

### Beschreibung der Erfindung

Gegenstand der Erfindung sind wäßrige Verdickungsmittel für wäßrige Wasserstoffperoxidlösungen, enthaltend - bezogen auf den nicht-wäßrigen Anteil der Mittel -
(a) 10 bis 90, vorzugsweise 40 bis 80 Gew.-% Fettsäurealkanolamide,
(b) 5 bis 20, vorzugsweise 8 bis 16 Gew.-% Alkylethersulfate,
(c) 0 bis 5, vorzugsweise 1 bis 4 Gew.-% Alkyletherphosphate und
(d) 0 bis 60, vorzugsweise 4 bis 50 Gew.-% Alkylpolyglycolether
mit der Maßgabe, daß sich die Gewichtsangaben zu 100 Gew.-% ergänzen.

Überraschenderweise wurde gefunden, daß die Mittel wäßrigen Bleichmittel auf Wasserstoffperoxidbasis eine ausreichend hohe und stabile Viskosität verleihen und dabei die Einarbeitung von Parfümstoffen ermöglichen, ohne daß es zu Austrübungen kommt. Die Tensidkomponente erweist sich gegenüber Aktivsauerstoffverbindungen stabil und verhindert die Wiederablagerung einmal gelöster Schmutzteilchen zuverlässig.

### Fettsäurealkanolamide

Fettsäurealkanolamide, die die Komponente (a) bilden, folgen vorzugsweise der Formel (**I**), 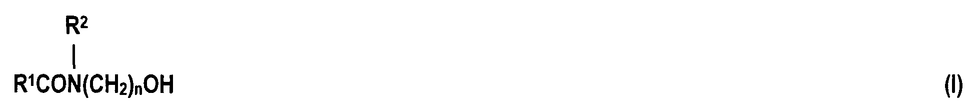 in der R¹CO für einen aliphatischen, gesättigten oder ungesättigten Acylrest mit 6 bis 22 Kohlenstoffatomen, R² für Wasserstoff oder einen gegebenenfalls hydroxysubstituierten Alkylrest mit 1 bis 4 Kohlenstoffatomen und n für Zahlen von 2 bis 4 steht. Die Alkanolamide können beispielsweise Kondensationsprodukte von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen mit Mono- oder Diethanolamin darstellen. Vorzugsweise werden Kokos- oder Stearinsäurefettsäurealkanolamide eingesetzt.

### Alkylethersulfate

Alkylethersulfate ("Ethersulfate"), die die Komponente (b) bilden, stellen bekannte anionische Tenside dar, die großtechnisch durch SO₃- oder Chlorsulfonsäure (CSA)-Sulfatierung von Alkylpolyglycolethern und nachfolgende Neutralisation hergestellt werden. Im Sinne der Erfindung kommen Ethersulfate in Betracht, die der Formel (II) folgen,

**R**^{**3**}**O-(CH**_{**2**}**CH**_{**2**}**O)**_{**m**}**SO**_{**3**}**X** (II)

in der R³ für einen linearen oder verzweigten Alkyl- und/oder Alkenylrest mit 6 bis 22 Kohlenstoffatomen, m für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen, in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

### Alkyletherphosphate

Alkyletherphosphate, die die Komponente (c) bilden, stellen ebenfalls bekannte anionische Tenside dar, die üblicherweise durch Umsetzung von ethoxylierten Fettalkoholen mit Phosphorpentoxid hergestellt werden. In Abhängigkeit des Einsatzverhältnisses der Komponenten werden dabei technische Gemische erhalten, die überwiegend Mono- und Dialkylester, neben Triestern, Phosphorsäure und nicht umgesetzten Alkohol enthalten. Übersichten zu diesem Thema sind beispielsweise von R.S. Cooper sowie G.lmokawa in **J.Am.Oil.Chem.Soc. 41, 337 (1964)** bzw. **55, 839 (1978),** H.Distler in **Tenside Detergents 12, 263 (1975)** und O'Lennick in **Soap, Cosm.Chem.Spec. 7, 26 (1986)** erschienen. Vorzugsweise folgen die Alkyletherphosphate der Formel (**III**), 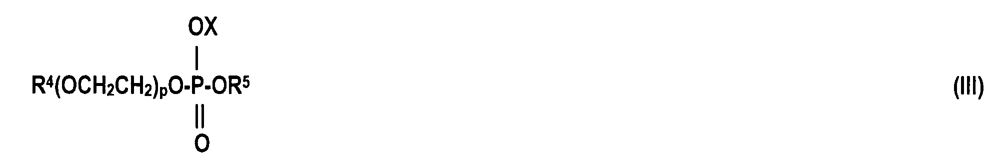 in der R⁴ für einen linearen oder verzweigten Alkylrest mit 6 bis 12 Kohlenstoffatomen, R⁵ für eine Gruppe R⁴(OCH₂CH₂)ₚ oder X, p für Zahlen von 1 bis 5 und X für Wasserstoff, ein Alkali- und/oder Erdalkalimetall steht. Typische Beispiele für ethoxylierte Phosphorsäureester, die im Sinne der Erfindung als Komponente (c) in Betracht kommen, sind Mono- und/oder Dialkylester auf Basis von Addukten von 1 bis 10, vorzugsweise 2 bis 8 Mol Ethylenoxid an Capronalkohol, Caprylalkohol, 2-Ethylhexylalkohol, Caprinalkohol und/ oder Laurylalkohol. Der Veresterungsgrad kann dabei 1 bis 2,5 und vorzugsweise 1,3 bis 2,1 betragen. Besonders bevorzugt sind ethoxylierte Phosphorsäureester der Formel (**III**), in der R⁴ für einen 2-Ethylhexylrest, R⁵ für X, p für Zahlen von 1 bis 3 und X für Wasserstoff steht. Die Mitverwendung von Alkyletherphosphaten ist für die Herstellung von trübungsfreien Mitteln beson-ders vorteilhaft.

### Alkylpolyglycolether

Schließlich können die Verdickungsmittel als fakultative Komponente (d) Alkylpolyglycolether vorzugsweise der Formel (**IV**) enthalten,

**R**^{**6**}**O(CH**_{**2**}**CH**_{**2**}**O)**_{**q**}**H** (IV)

in der R⁶ für einen Alkyl- und/oder Alkenylrest mit 6 bis 22 Kohlenstoffatomen und q für Zahlen von 1 bis 10 steht. Typische Beispiele für geeignete nichtionische Tenside der Formel (**IV**) sind Anlagerungsprodukte von durchschnittliche 1 bis 10 und insbesondere 5 bis 8 Mol Ethylenoxid an jeweils 1 Mol Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen. Vorzugsweise werden Anlagerungsprodukte von 5 bis 8 Mol Ethylenoxid an Fettalkohole mit 12 bis 18 und insbesondere 16 bis 18 Kohlenstoffatomen eingesetzt, die eine konventionelle, vorzugsweise jedoch eine eingeengte Homologenverteilung aufweisen können. Die Mitverwendung der Komponente (d) ist im Hinblick auf die Einarbeitung von Parfümstoffen und die Peroxidstabilität von besonderem Vorteil.

### Gewerbliche Anwendbarkeit

Die erfindungsgemäßen Mittel verleihen wäßrigen Bleichmittel auf Peroxidbasis eine ausreichend hohe und beständige Viskosität. Die Mittel liegen dabei vorzugsweise als wäßrige Zubereitungen vor, die einen nicht-wäßrigen Anteil von 10 bis 50 und vorzugsweise 20 bis 40 Gew.-% aufweisen. Ein weiterer Gegenstand der Erfindung betrifft ihre Verwendung als Verdickungsmittel für wäßrige Wasserstoffperoxidlösungen. Bei den wäßrigen Wasserstoffperoxidlösungen handelt es sich vorzugsweise um wäßrige Bleichmittel des Marktes, die dementsprechend in der Regel einen Aktivsubstanzgehalt von 1 bis 10 und vorzugsweise 5 bis 8 Gew.-% aufweisen. Üblicherweise werden die Mittel in Mengen von 1 bis 5 und vorzugsweise 2 bis 4 Gew.-% - bezogen auf ihren nicht-wäßrigen Anteil und die wäßrigen Wasserstoffperoxidlösungen - eingesetzt.

### Hilfs- und Zusatzstoffe

Als Hilfs- und Zusatzstoffe können die wäßrigen Wasserstoffperoxidlösungen weitere peroxidstabile Tenside bzw. Hydrotrope enthalten, wie etwa Alkylsulfate, Alkylsulfonate, Alkylbenzolsulfonate, Xylolsulfonate, Sarkosinate, Tauride, Isethionate, Sulfosuccinate, Ethercarbonsäuren, Betaine, Zuckerester, Aminoxide und Alkyloligoglykoside. Vorzugsweise macht die Summe dieser zusätzlichen Tenside höchstens 10 Gew.-% der Gesamtmenge an Tensiden in der Rezeptur aus. Darüber hinaus können die Mittel peroxidstabile Duftstoffe, optische Aufheller, Farbstoffe und Pigmente in Mengen von insgesamt 0,01 bis 0,5 Gew.-% - bezogen auf die Mittel - enthalten. Zu den als peroxidbeständig bekannten Duftstoffen zählen beispielsweise monocyclische und bicyclische Monoterpenalkohole sowie deren Ester mit Essig- oder Propionsäure (z.B. Isoborneal, Dihydroterpenöl, Isobornylacetat, Dihydroterpenylacetat). Bei den optischen Aufhellern kann es sich beispielsweise um das Kalisalz der 4,4'-bis-(1,2,3-Triazolyl)-(2-)-Stilbin-2,2-sulfonsäure handeln, das unter der Markenbezeichnung Phorwite® BHC 766 vertrieben wird. Als Farbpigmente kommen u.a. grüne Chlorophthalocyanine (Pigmosol® Green, Hostaphine® Green) oder gelbes Solar Yellow BG 300 (Sandoz) in Frage. Die Herstellung der erfindungsgemäßen Mittel erfolgt mittels Umrühren. Gegebenenfalls kann das erhaltene Produkt zur Abtrennung von Fremdkörpern und/oder Agglomeraten dekantiert oder filtriert werden.

### Beispiele

**Beispiele 1 bis 3, Vergleichsbeispiele V1 und V2**. Eine wäßrige Wasserstoffperoxidlösung mit einem Peroxidgehalt von 7 Gew.-% und einem Gehalt von 0,1 Parfümstoff (Isoborneol) wurde mit 3 Gew.-% der erfindungsgemäßen Verdickungsmittel 1 bis 3 der Vergleichsprodukte V1 und V2 in Form 30 Gew.-%iger Lösungen versetzt. Die Viskosität der Lösungen wurde nach der Brookfield-Methode in einem RVT-Viskosimeter (20°C, 10 Upm, Spindel 2) ermittelt. Der Peroxidgehalt sowie das optische Erscheinungsbild wurde nach einer Lagerung von 4 Wochen bestimmt. Die Ergebnisse sind in Tabelle 1 zusammengefaßt (Mengenangaben beziehen sich auf den Aktivsubstanzgehalt und verstehen sich als Gew.-%).

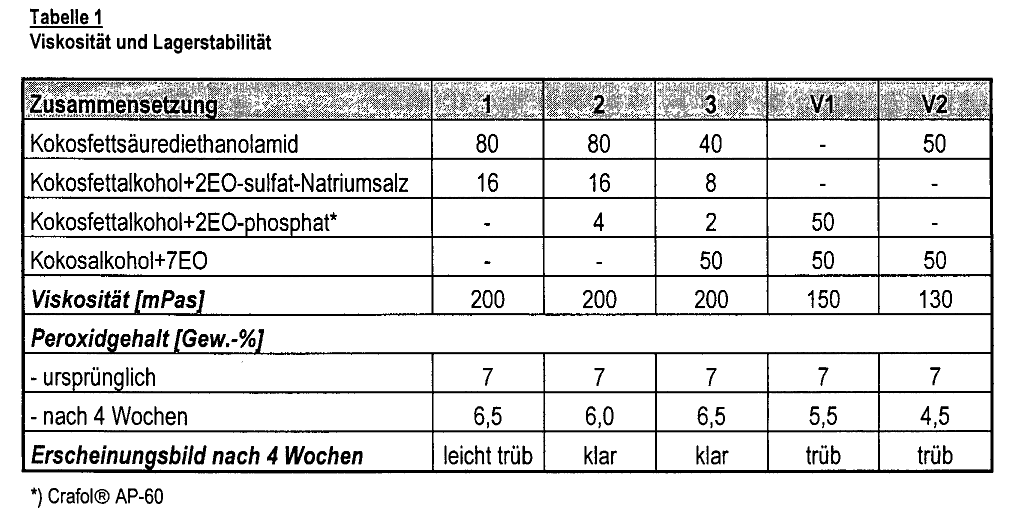

## Patentansprüche

1. Verdickungsmittel für wäßrige Wasserstoffperoxidlösungen, enthaltend - bezogen auf den Aktivsubstanz gehalt der Mittel -
(a) 10 bis 90 Gew.-% Fettsäurealkanolamide,
(b) 5 bis 20 Gew.-% Alkylethersulfate,
(c) 0 bis 5 Gew.-% Alkyletherphosphate und
(d) 0 bis 60 Gew.-% Alkylpolyglycolether
mit der Maßgabe, daß sich die Gewichtsangaben zu 100 Gew.-% ergänzen.

2. Mittel nach Anspruch 1, **dadurch gekennzeichnet,** daß sie Fettsäurealkanolamide der Formel (I) enthalten, 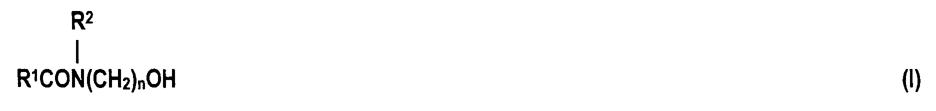 in der R¹CO für einen aliphatischen, gesättigten oder ungesättigten Acylrest mit 6 bis 22 Kohlenstoffatomen, R² für Wasserstoff oder einen gegebenenfalls hydroxysubstituierten Alkylrest mit 1 bis 4 Kohlenstoffatomen und n für Zahlen von 2 bis 4 steht.

3. Mittel nach den Ansprüchen 1 und 2, **dadurch gekennzeichnet**, daß sie Alkylethersulfate der Formel (II) enthalten,
**R**^{**3**}**O-(CH**_{**2**}**CH**_{**2**}**O)**_{**m**}**SO**_{**3**}**X** (II)
in der R³ für einen linearen oder verzweigten Alkyl- und/oder Alkenylrest mit 6 bis 22 Kohlenstoffatomen, m für Zahlen von 1 bis 10 und X für ein Alkali- und/oder Erdalkalimetall, Ammonium, Alkylammonium, Alkanolammonium oder Glucammonium steht.

4. Mittel nach den Ansprüchen 1 bis 3, **dadurch gekennzeichnet,** daß sie Alkyletherphosphate der Formel (**III**) enthalten, 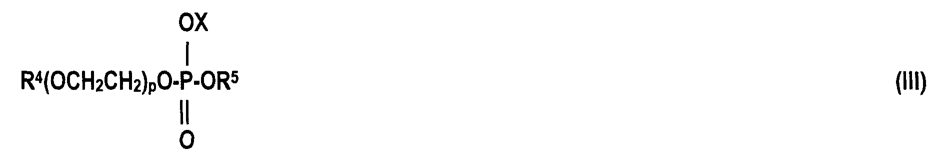 in der R⁴ für einen linearen oder verzweigten Alkylrest mit 6 bis 12 Kohlenstoffatomen, R⁵ für eine Gruppe R⁴(OCH₂CH₂)ₚ oder X, p für Zahlen von 1 bis 5 und X für Wasserstoff, ein Alkali- und/oder Erdalkalimetall steht.

5. Mittel nach den Ansprüchen 1 bis 4, **dadurch gekennzeichnet**, daß sie Alkylpolyglycolether der Formel (**IV**) enthalten,
**R**^{**6**}**O(CH**_{**2**}**CH**_{**2**}**O)**_{**q**}**H** (IV)
in der R⁶ für einen Alkyl- und/oder Alkenylrest mit 6 bis 22 Kohlenstoffatomen und q für Zahlen von 1 bis 10 steht.

6. Verwendung von Mitteln nach den Ansprüchen 1 bis 5 als Verdickungsmittel für wäßrige Wasserstoffperoxidlösungen.

7. Verwendung nach Anspruch 6, **dadurch gekennzeichnet,** daß man die Mittel wäßrigen Wasserstoffperoxidlösungen mit einem Aktivsubstanzgehalt von 1 bis 10 Gew.-% zusetzt.

8. Verwendung nach den Ansprüchen 6 und 7, **dadurch gekennzeichnet,** daß man die Mittel in Mengen von 1 bis 5 Gew.-% - bezogen auf die wäßrigen Wasserstoffperoxidlösungen - einsetzt.

## Claims

1. Thickeners for aqueous hydrogen peroxide solutions containing-based on the active substance content of the thickener -
(a) 10 to 90% by weight fatty acid alkanolamides,
(b) 5 to 20% by weight alkyl ether sulfates,
(c) 0 to 5% by weight alkyl ether phosphates and
(d) 0 to 60% by weight alkyl polyglycol ethers,
(e) with the proviso that the quantities by weight shown add up to 100% by weight.

2. Thickeners as claimed in claim 1, characterized in that they contain fatty acid alkanolamides corresponding to formula (I): 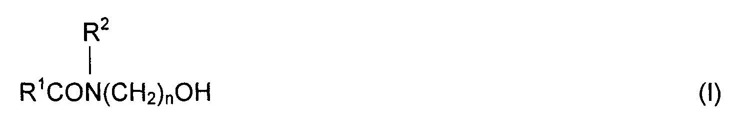 in which R¹CO is an aliphatic, saturated or unsaturated acyl group containing 6 to 22 carbon atoms, R² is hydrogen or an optionally hydroxysubstituted alkyl group containing 1 to 4 carbon atoms and n is a number of 2 to 4.

3. Thickeners as claimed in claims 1 and 2, characterized in that they contain alkyl ether sulfates corresponding to formula (II):
R³O-(CH₂CH₂O)ₘSO₃X (II)
in which R³ is a linear or branched alkyl and/or alkenyl group containing 6 to 22 carbon atoms, m is a number of 1 to 10 and X is an alkali metal and/or alkaline earth metal, ammonium, alkyl ammonium, alkanolammonium or glucammonium.

4. Thickeners as claimed in claims 1 to 3, characterized in that they contain alkyl ether phosphates corresponding to formula (III): 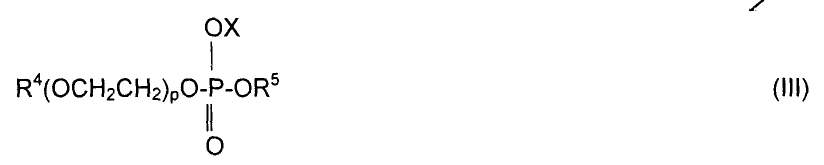 in which R⁴ is a linear or branched alkyl group containing 6 to 12 carbon atoms, R⁵ is a group R⁴(OCH₂CH₂)ₚ or X, p is a number of 1 to 5 and X is hydrogen, an alkali metal and/or alkaline earth metal.

5. Thickeners as claimed in claims 1 to 4, characterized in that they contain alkyl polyglycol ethers corresponding to formula (IV):
R⁶O(CH₂CH₂O)_{q}H
in which R⁶ is an alkyl and/or alkenyl group containing 6 to 22 carbon atoms and q is a number of 1 to 10.

6. The use of the thickeners claimed in claims 1 to 5 for thickening aqueous hydrogen peroxide solutions.

7. The use claimed in claim 6, characterized in that the thickeners are added to aqueous hydrogen peroxide solutions with an active substance content of 1 to 10% by weight.

8. The use claimed in claims 6 and 7, characterized in that the thickeners are used in quantities of 1 to 5% by weight, based on the aqueous hydrogen peroxide solutions.w

## Revendications

1. Epaississants pour solutions aqueuses de peroxyde d'hydrogène, contenant, par rapport à la teneur en substance active des produits :
(a) 10 à 90 % en poids d'alcanolamides d'acides gras,
(b) 5 à 20 % en poids d'alkyléthersulfates,
(c) 0 à 5 % en poids d'alkylétherphosphates et
(d) 0 à 60 % en poids d'alkylpolyglycoléther,
étant entendu que les données pondérales se complètent à 100 % en poids.

2. Epaississants selon la revendication 1,
caractérisés en ce qu'
ils contiennent des alcanolamides d'acides gras de formule (I) 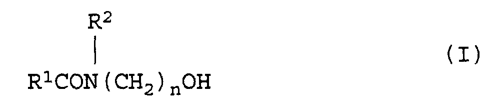 dans laquelle R¹CO représente un radical acyle aliphatique, saturé ou insaturé, ayant de 6 à 22 atomes de carbone, R² représente un atome d'hydrogène ou un radical alkyle ayant de 1 à 4 atomes de carbone, éventuellement substitué par le groupe hydroxy, et n représente un nombre allant de 2 à 4.

3. Epaississants selon les revendications 1 et 2,
caractérisés en ce qu'
ils contiennent des alkyléthersulfates de formule (II)
R³O-(CH₂CH₂O)ₘSO₃X (II)
dans laquelle R³ représente un radical alkyle et/ou alcényle linéaire ou ramifié, ayant de 6 à 22 atomes de carbone, m représente un nombre allant de 1 à 10 et X représente un métal alcalin et/ou alcalino-terreux, ou un ion ammonium, alkylammonium, alcanolammonium ou glucammonium.

4. Epaississants selon l'une quelconque des revendications 1 à 3,
caractérisés en ce qu'
ils contiennent des alkyléthersulfates de formule (III) 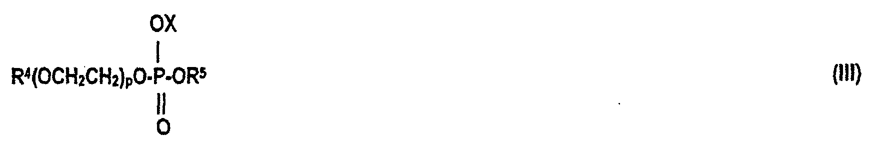 dans laquelle R⁴ représente un radical alkyle linéaire ou ramifié ayant de 6 à 12 atomes de carbone, R⁵ représente un groupe R⁴(OCH₂CH₂)ₚ ou X, p représente un nombre allant de 1 à 5 et X représente un atome d'hydrogène, un métal alcalin et/ou alcalino-terreux.

5. Epaississants selon l'une quelconque des revendications 1 à 4,
caractérisés en ce qu'
ils contiennent des alkylpolyglycoléthers de formule (IV)
R⁶O(CH₂CH₂O)_{q}H (IV)
dans laquelle R⁶ représente un radical alkyle et/ou alcényle ayant de 6 à 22 atomes de carbone, et q représente un nombre allant de 1 à 10.

6. Utilisation d'épaississants selon l'une quelconque des revendications 1 à 5,
en tant qu'épaississant pour des solutions aqueuses de peroxyde d'hydrogène.

7. Utilisation selon la revendication 6,
caractérisée en ce qu'
on ajoute les épaississants à des solutions aqueuses de peroxyde d'hydrogène ayant une teneur en substance active de 1 à 10 % en poids.

8. Utilisation selon les revendications 6 et 7,
caractérisée en ce qu'
on utilise les épaississants en quantités de 1 à 5 % en poids, par rapport aux solutions aqueuses de peroxyde d'hydrogène.
